# EUROPEAN PATENT APPLICATION

(11) **EP 2 669 086 A1**
(43) Date of publication of application: **04.12.2013**
(21) Application number: 12382213.2
(22) Date of filing: 28.05.2012
(51) Int. Cl.: B32B 27/32

(54) **Cast silage film with enhanced cling properties**

(71) Applicant: Dow Global Technologies LLC, Midland, MI 48674 (US)
(72) Inventor: Manrique, Antonio, 43007 Tarragona (ES); Mayer, Andreas, 8832 Wollerau (CH)
(74) Representative: Elzaburu Marquez, Alberto

(57) **Abstract**

The present invention relates to a cast film comprising at least the following three layers: 1) A first skin layer comprising a homogeneously branched linear low density polyethylene having a density in the range of 0.87 to 0.90 g/cm³ and a melt index greater than 1 g/10 min; 2) a core layer comprising linear low density polyethylene having a density 0.915 to 0.930 g/cm³ and a melt index greater than 1 g/10 min; and 3) a second skin layer comprising at least 25 % by weight of the release layer of a propylene based plastomer or elastomer (PBPE) having an ethylene content of from 10 to 18% and a MFR of from 4 to 8 g/10 min. The first and the second skin layers each comprise from 10 to 20% by weight of the cast film.

## Description

### Field of the Invention

This invention relates to films and more particularly to cast cling films particularly well suited for use in silage applications.

### Background and Summary

Stretch/cling films have wide application, including bundling packaged food and other goods. One application of particular interest is in baling applications such as, for example, packaging grass, maize, sugar beet pulp, malt, straw, household refuse and other bales.

For silage making, typically, a baler is first used to press compact round or rectangular bales (approx. 500 - 1,300 kg). Bales are subsequently usually wrapped immediately with a number of layers of netting or film. By slowing down the roll of film or netting during unwinding operation, the net or film is tensioned tautly around the bale. Once the net or film is positioned around the bale, the formed bale is ejected from the baling chamber. The netting or film ensures that the product remains compressed in the bale and that the bale retains its shape.

Film can be preferred to netting as film helps to make the bale airtight and waterproof. Standard agricultural stretch wrap films for wrapping bales are comparable to the industrial stretch wrap films used for wrapping pallet loads, with the difference that the agricultural stretch wrap films are usually colored and ultraviolet stabilized. However, bales made from current films do not remain compressed and tend to fall apart or lose their shape, and so are frequently used in combination with netting or other means for holding the bale in place.

The stretch wrap films known until now have many advantages, but also have a number of clear disadvantages. The greatest disadvantage is that the existing stretch wrap films when applied around the bale, as a result of the expansion pressure of the packed product, will elongate if there is insufficient slowing down of the film roll, and consequently will result in a less compact bale. This consequently leads to the absorption of air and an increased oxygen concentration in the bale. If the film roll can actually be slowed down sufficiently, the film will lie sufficiently tautly around the bale, but a constriction (necking) will appear in the film in the transverse direction, with the result that the bale will not be fully covered.

Because the film can be under considerable tension in a stretched condition, it has a tendency to return to its original, unstretched state. Unless the film has sufficient cling, this tension can cause the film to unravel from the wrapped pallet, thereby jeopardizing the integrity of the bale. A film having improved cling properties to prevent unraveling of the film from the bale is therefore desirable.

A second reason for defined cling properties between single layers of such a cocoon type of wrapping is the need to create an air- and water-tight sleeve around the whole package. Good adhesion between single film layers in this case can eliminate creep of air and/or water over these interphase contact areas from the outside.

To impart cling properties or improve the cling properties of a particular film, a number of techniques have been employed, such as the addition of tackifying additives or use of acrylates in the (co)polymer. Common tackifying additives include polybutenes, terpene resins, alkali metal and glycerol stearates and oleates and hydrogenated resins and esters.

The use of tackifiers has disadvantages. While tackification is known in the art to enhance cling in an olefin cling film, stretching the film normally reduces the cling properties. The tackifier may also present blending difficulties during film manufacture, adversely affect optical properties of the film and enhance surface migration of the additive. Such migration can damage the wrapped goods and, cause the collapse and/or telescoping of the rolls.

Multilayer films offer the advantage of imparting several properties not easily obtained from a single layer. See US 4,518,654 and US 5,114,763 incorporated by reference. With a multilayer film, a stretch/cling wrap can have cling properties on one side and, for example, slip properties on the other. Other layers may be used for barrier properties or to provide toughness for the film.

It would be desirable to have a multilayer cast film which possesses a desirable combination of stretch, tensile, tear-resistance, puncture-resistance, optical, and thermal stability properties.

The present invention relates to such films. In one embodiment, the present invention relates to a cast film comprising at least the following three layers: 1) A first skin layer comprising a homogeneously branched linear low density polyethylene having a density in the range of 0.87 to 0.90 g/cm3 and a melt index greater than 1 g/10 min; 2) a core layer comprising linear low density polyethylene having a density 0.915 to 0.930 g/cm3 and a melt index greater than 1 g/10 min; and 3)a second skin layer comprising at least 25 % by weight of the release layer of a propylene based plastomer or elastomer (PBPE) having an ethylene content of from 10 to 18% and a MFR of from 4 to 8 g/10 min. The first and the second skin layers each comprise from 10 to 20% by weight of the cast film.

### BRIEF DESCRIPTION OF THE DRAWINGS

Fig. 1 is a bar graph depicting the Dart Drop Impact for the Examples (both inventive and comparative) of the present application;
Fig. 2 is a bar graph depicting the Elmendorf Tear values in the MD and CD for the Examples (both inventive and comparative) of the present application;
Fig. 3 is a bar graph depicting the Sound Level values for the Examples (both inventive and comparative) of the present application;
Fig. 4 is a bar graph depicting the cling levels at 100% elongation for the Examples (both inventive and comparative) of the present application;
Fig. 5 is a bar graph depicting the Puncture Elongation and Puncture Force values for the Examples (both inventive and comparative) of the present application;
Fig. 6 is a bar graph depicting the Puncture Elongation and Puncture Force values at 100% elongation for the Examples (both inventive and comparative) of the present application;
Fig. 7 is a bar graph depicting the Oxygen Transmission Rate and Oxygen Transmission rate at 100% elongation for the Examples (both inventive and comparative) of the present application; and
Fig. 8 is a bar graph depicting the Average Cling for the Examples (both inventive and comparative) of the present application.

### DETAILED DESCRIPTION OF THE INVENTION

The term "polymer", as used herein, refers to a polymeric compound prepared by polymerizing monomers, whether of the same or a different type. The generic term polymer thus embraces the term "homopolymer", usually employed to refer to polymers prepared from only one type of monomer as well as "copolymer" which refers to polymers prepared from two or more different monomers.

"Polyethylene" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single site catalyzed Linear Low Density Polyethylene, including both linear and substantially linear low density resins (m-LLDPE); and High Density Polyethylene (HDPE). These polyethylene materials are generally known in the art; however the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392, herein incorporated by reference). LDPE resins typically have a density in the range of 0.916 to 0.940 g/cm³.

The term "LLDPE", includes both resin made using the traditional Ziegler-Natta catalyst systems as well as single-site catalysts such as metallocenes (sometimes referred to as "m-LLDPE"). LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The Linear PE can be made via gas-phase, solution-phase or slurry polymerization or any combination thereof, using any type of reactor or reactor configuration known in the art, with gas and slurry phase reactors being most preferred.

The term "HDPE" refers to polyethylenes having densities greater than about 0.940 g/cm3, which are generally prepared with Ziegler-Natta catalysts, chrome catalysts or even metallocene catalysts.

"Multimodal" means resin compositions which can be characterized by having at least two distinct peaks in a GPC chromatogram showing the molecular weight distribution. Multimodal includes resins having two peaks as well as resins having more than two peaks.

The following analytical methods are used in the present invention:
Density is determined in accordance with ASTM D792.
"Melt index" also referred to as "I₂" is determined according to ASTM D1238 (190°C, 2.16 kg).

Peak melting point is determined by Differential Scanning Calorimeter (DSC) where the film is conditioned at 230°C for 3 minutes prior to cooling at a rate of 10 °C per minute to a temperature of -40 °C. After the film is kept at -40°C for 3 minutes, the film is heated to 200°C at a rate of 10 °C per minute.

The term molecular weight distribution or "MWD" is defined as the ratio of weight average molecular weight to number average molecular weight (M_{w}/Mₙ). M_{w} and Mₙ are determined according to methods known in the art using conventional gel permeation chromatography (GPC).

Water Vapor Transmission Rate (or WVTR) is determined according to ASTM E 96/E 96 M-05.

Dart Impact is determined according to ASTM D 1709 method A.

### Cast films

In its broadest sense the present invention is a cast film comprising at least the following three layers:
a) a first skin layer comprising a homogeneously branched linear low density polyethylene having a density in the range of 0.87 to 0.90 g/cm3 and a melt index greater than 1 g/10 min;
b) a core layer comprising linear low density polyethylene having a density 0.915 to 0.930 g/cm3 and a melt index greater than 1 g/10min; and
c) a second skin layer comprising at least 25 % by weight of the release layer of a propylene based plastomer or elastomer (PBPE) having an ethylene content of from 5 to 18% and a MFR of from 4 to 8 g/10min.

The first and the second skin layers each comprise from 10 to 20% by weight of the cast film. The core layer may comprise from 60 to 80 % by weight of the cast film. It is also contemplated that the cast film may comprise additional layers. These layers may be selected to provide additional functionality, for example barrier properties.

Homogeneously branched linear low density polyethylene polymers for use in the first skin layer of the cast films of the present invention have a ratio of I₁₀/I₂ (that is the melt flow as determined according to _{ASTM} D1238 (190°C) with a 10.16 kg force divided by the melt flow obtained with a 2.16 kg force) in the range of from 7 to 10, more preferably in the range of from 7.5 to 8.5. In some embodiments the homogeneously branched linear low density polyethylene polymers may be characterized as having a molecular weight distribution (Mw/Mn) ratio in the range of from 2 to 4, more preferably in the range of from 2 to 3. Commercially available homogeneously branched linear low density polyethylene polymers include TAFMER^{™} resins supplied by Mitsui Petrochemical Corporation, EXACT^{™} resins supplied by Exxon, and AFFINITY^{™} and ENGAGE^{™} resins supplied by The Dow Chemical Company. The homogeneously branched linear low density polyethylene should have a density in the range of 0.87 to 0.90 g/cm³, preferably in the range of from 0.8725 to 0.8775 g/cm³. The homogeneously branched linear low density polyethylene should have a melt index (I₂) greater than 1 g/10 min, preferably in the range of from 1 to 8, more preferably in the range from 2 to 7 g/10 min

The core layer of the cast films of the present invention comprise a linear low density polyethylene having a density of from 0.915 to 0.930 g/cm³. This material is preferably heterogeneously branched as indicated by having an M_{w}/Mₙ ratio in the range of from 3 to 7: 1, preferably in the range of from 3 to 5: 1. The melt index (I₂) of the polymer used in the core layer should be greater than 1 g/min, preferably in the range of from 1 to 8, more preferably in the range from 2 to 7 g/10min.

The second skin layer of the cast films of the present invention comprises at least 25 percent by weight of the second skin layer of a propylene-based plastomer or elastomer or "PBPE". These materials comprise at least one copolymer with at least about 50 weight percent of units derived from propylene and at least about 5 weight percent of units derived from a comonomer other than propylene, preferably ethylene. Suitable propylene based elastomers and/or plastomers are taught in WO03/040442, and WO/2007/024447, each of which is hereby incorporated by reference in its entirety.

Of particular interest for use in the present invention are reactor grade PBPEs having MWD less than 3.5. It is intended that the term "reactor grade" is as defined in US Patent 6,010,588 and in general refers to a polyolefin resin whose molecular weight distribution (MWD) or polydispersity has not been substantially altered after polymerization. The preferred PBPE will have a heat of fusion (as determined using the DSC method described in US application 60/709688) less than about 90 Joules/gm, preferably less than about 70 Joules/gm, more preferably less than about 50 Joules/gm. When ethylene is used as a comonomer, the PBPE has from about 3 to about 15 percent of ethylene, or from about 5 to about 14 percent of ethylene, or about 7 to 12 percent ethylene, by weight of the propylene based elastomer or plastomer. Examples of good haze and appropriate peel strengths have been observed using PBPE with about a 9% ethylene content.

Although the remaining units of the propylene copolymer are derived from at least one comonomer such as ethylene, a C4-20 α-olefin, a C4-20 diene, a styrenic compound and the like, preferably the comonomer is at least one of ethylene and a C4-12 α-olefin such as 1-hexene or 1-octene. Preferably, the remaining units of the copolymer are derived only from ethylene.

The amount of comonomer other than ethylene in the propylene based elastomer or plastomer is a function of, at least in part, the comonomer and the desired heat of fusion of the copolymer. If the comonomer is ethylene, then typically the comonomer-derived units comprise not in excess of about 18 wt % of the copolymer, preferably less than 15%. The minimum amount of ethylene-derived units is typically at least about 3, preferably at least about 5 and more preferably at least about 9, wt % based upon the weight of the copolymer. If the polymer comprises at least one other comonomer other than ethylene, then the preferred composition would have a heat of fusion approximately in the range of a propylene-ethylene copolymer with about 8 to 18 wt % ethylene. Though not intending to be bound by theory, it is thought that attaining approximately similar crystallinity and crystal morphology is beneficial to achieving similar functionality as a cling silage film.

The propylene based plastomer or elastomer for use in the second skin layer can be made by any process, and includes copolymers made by Ziegler-Natta, CGC (Constrained Geometry Catalyst), metallocene, and nonmetallocene, metal-centered, heteroaryl ligand catalysis. These copolymers include random, block and graft copolymers although preferably the copolymers are of a random configuration. Exemplary propylene copolymers include ExxonMobil VISTAMAXX polymer, and VERSIFY propylene/ethylene elastomers and plastomers by The Dow Chemical Company.

The density of the propylene based elastomers or plastomers for use in this invention is typically at least about 0.850, can be at least about 0.860 and can also be at least about 0.865 grams per cubic centimeter (g/cm3) as measured by ASTM D-792. Preferably the density is less than about 0.89 g/cc. In general the lower the density, the greater the "cling".

The weight average molecular weight (Mw) of the propylene based elastomers or plastomers of this invention can vary widely, but typically it is between about 10,000 and 1,000,000, or even between 50,000 and 500,000 (with the understanding that the only limit on the minimum or the maximum Mw is that set by practical considerations).

The polydispersity of the propylene based elastomers or plastomers of this invention is typically between about 2 and about 5. In general, it is preferred to use material with a narrow polydispersity. "Narrow polydispersity", "narrow molecular weight distribution", "narrow MWD" and similar terms mean a ratio (Mw/Mn) of weight average molecular weight (Mw) to number average molecular weight (Mn) of less than about 3.5, can be less than about 3.0, can also be less than about 2.8, can also be less than about 2.5.

The PBPEs for use in the present invention ideally have an MFR of from 3 to 10 g/10min, preferably from about 4 to 8 g/10min. MFR for copolymers of propylene and ethylene and/or one or more C₄-C₂₀ α-olefins (polymers having at least 50% by weight units derived from propylene) is measured according to ASTM D-1238, condition L (2.16 kg, 230°C).

The second skin layer will contain at least 25% by weight of the layer, PBPE. In some embodiments, it may be advantageous for the layer to comprise 100% PBPE. Additional materials which may be blended with the PBPE for use in the second skin layer include random copolymer polypropylene and polyethylene (LDPE, LLDPE, m-LLDPE, HDPE, etc).

The cast films of the present invention can be made by conventional cast film methods, including mono- and biaxial orientation, as is generally known in the art. In some embodiments the films of the present invention may be advantageously stretched at least 50%, preferably 100% in the machine and/or cross directions.

The first and the second skin layers each preferably comprise from 10 to 20% by weight of the cast film, independently. It may be advantageous for the film to have an overall thickness of from 15 to 30 microns thick.

It is also contemplated that the cast film may comprise additional non-skin layers. These layers may be selected to provide additional functionality, such as bale handling, and include materials such as slip and antiblock additives or additional polyolefin based resins having a higher density ( for example, greater than 0.930 g/cc)..

As is generally known in the art, each of the layers may include additives, such as pigments, inorganic fillers, UV stabilizers, antioxidants, etc.

The cast films of the present invention will be marked by high peel cling levels. Cling, which can be measured according to ASTM D4649, is preferably at least 150 g, more preferably at least 175 g.

### EXAMPLES

In order to demonstrate the effectiveness of the present invention a series of 3 layer cast films were made. Each film was 23 microns thick with the first and second skin layers each comprising 15% by weight of the film (with the core layer comprising the remaining 70%), with the make-up of the films as described in Table 1

The following resins were used:
Resin A is a homogeneously branched linear low density polyethylene having a density of 0.8725-0.8775, g/cm³ a melt index (I₂) of 2.5-3.5 g/10 min.
Resin B is a heterogeneously branched linear low density polyethylene having a density of 0.915-0.919 g/cm³, a melt index (I₂) of 2-2.6 g/10 min and a ratio of I₁₀/I₂ of 7.1 - 7.9: 1.
Resin C is a heterogeneously branched linear low density polyethylene having a density of 0.933-0.937, g/cm³ a melt index (I₂) of 2.4-2.9 g/10 min and a ratio of I₁₀/I₂ of 7.2 - 7.7: 1.
Resin D is a PBPE being derived from 5 percent ethylene, having a density of 0.889 - 0.891 g/cm³, an MFR of 6.4-9.6 g/10 min, and a ratio of I₁₀/I₂ of about 11.7: 1
Resin E is a random copolymer polypropylene-ethylene with a target ethylene level of 4.5 % having a target MFR of 8 g/10 min.

**Table 1**

| | Comp. Ex. 1 | Ex. 2 | Ex. 3 | Ex. 4 | Comp. Ex. 5 | Ex. 6 | Comp. Ex. 7 |
|---|---|---|---|---|---|---|---|
| First skin | Resin A | Resin A | Resin A | Resin A | Resin A | Resin A | Resin A |
| core | Resin B | Resin B | Resin B | Resin B | Resin B | Resin B | Resin B |
| Second skin | 100% Resin C | 50% Resin C/50% Resin D | 25% Resin C/75% Resin D | 100% Resin D | 100% Resin E | 50% Resin E/50% Resin D | 50% Resin C/50% Resin E |

To evaluate puncture elongation, puncture force, puncture elongation at 100% elongation in MD, and puncture elongation at 100% elongation in MD, a Quality Control Stand machine manufactured by Highlight Industries was used, according to the following methodology. Highlight quality control stand is equipment which allows performing several tests on the whole film width directly unwound from the reel. All these tests are intended to determine different abuse properties to be related with real effects on the final product used by customers.

In this procedure it is described the basic requirements to perform a Puncture test according to our methodology, since there are no standards in the market. Puncture test in intended to determine the penetration force of a conical tip over a stretched film. Nevertheless, is not comparable to other puncture methods performed in different dynamometers. Additionally, the equipment allows setting different stretch levels, from 50% to 500%.

Samples are conditioned at 23 ± 2°C, according to ASTM D618. The time is not specified by the norm, but in general they are conditioned for minimum 48 hours. The basic operation is described in Table 2.

**Table 2**

| | | |
|---|---|---|
| **1** | Turn on the equipment and the computer, in that order. | |
| **2** | Run the test stand application and select collect data from new tests. | |
| **3** | Select Puncture test and check if the puncture tip is installed into the drum's slot. | |
| | (NOTE: if the tip is not installed, click on "tip change", select expand tip and screw it up without tightening much, then press retract tip). | |
| **4** | Pass the film through the equipment as to perform puncture test (including drum). | |
| **5** | On the computer, select 100% of elongation. | |
| **6** | Select working mode according to the sample: | |
| | - | Light: lower thickness than 17 microns or less than 500 mm film width |
| | - | Standard: from 17 to 50 microns. |
| | - | Heavy: above 50 microns. |
| | Select traction mode according to sample adhesion level: | |
| | - | If adhesion is high, traction must be puncture/retention 1. |
| | - | If adhesion is standard, traction must be puncture/retention 2. |
| | - | If adhesion is low, traction must be puncture/retention 3. |
| | (NOTE: do not switch the traction dial while the equipment is running). | |
| **7** | Select number of tests, normally 3. | |
| **8** | Press start test. | |
| | (NOTE: check that speed is 55 m/min, on the right bottom display) | |
| **9** | Observe how the equipment reaches the desired elongation level and wait for equipment to stop and the tip to expand. Note if the film breaks or not. | |
| **10** | Wait for the three runs to be completed. | |
| **11** | Save the data and report it accordingly. | |
| **12** | Results acceptance depend on the required standard deviation, normally 10% of nominal value or lower. Those results statistically deviated have to be eliminated from the average calculation. | |
| **13** | Remove the film from the equipment. | |
| **14** | Shut down computer and equipment, in that order. | |

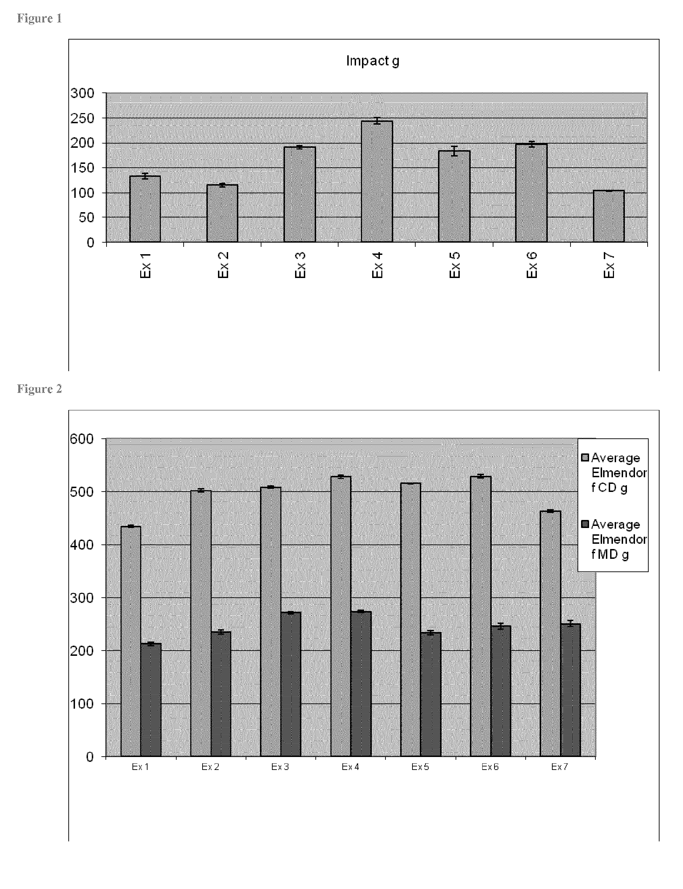

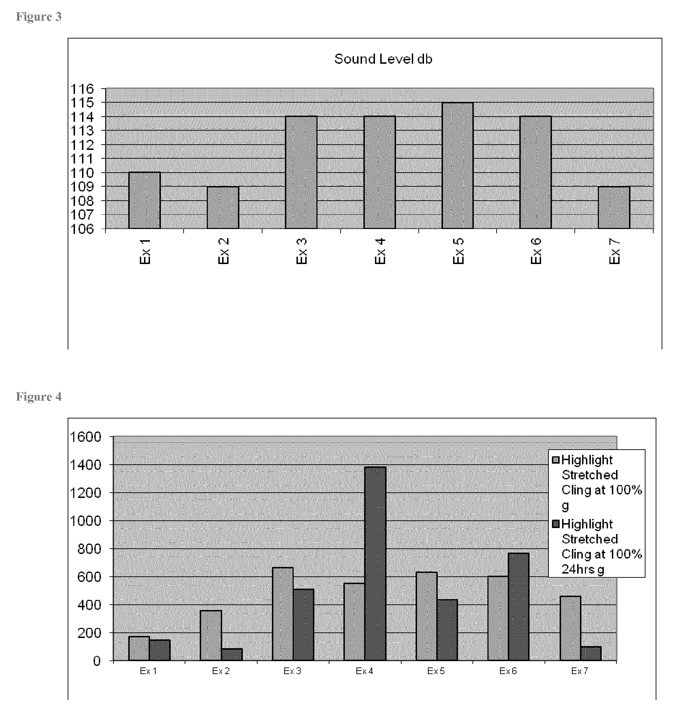

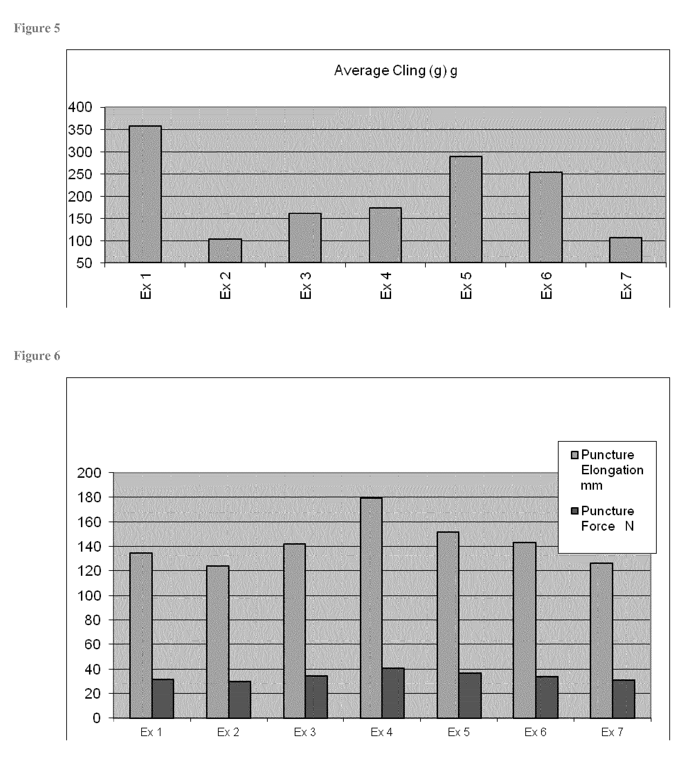

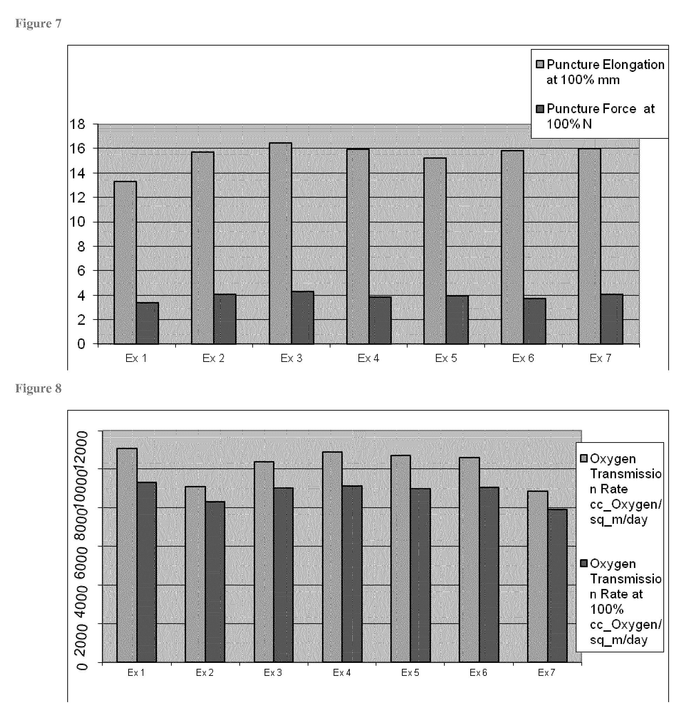

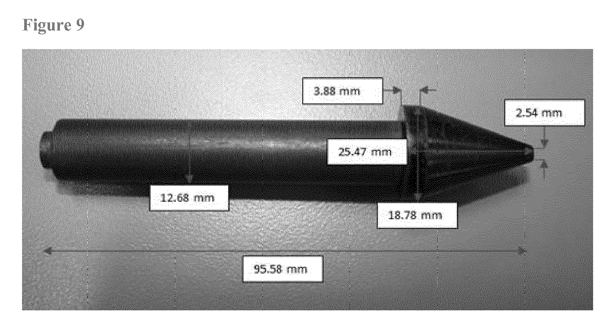

The conical dip used in the testing is as depicted in Figure 9. The films are evaluated for Dart Drop Impact (as determined according to ASTM D-1709; Elmendorf Tear (as determined according to ASTM D-1922); Sound Level (as determined with a device according to IEC 61672:2003); stretched cling (as determined according to ASTM D-4649); puncture elongation (as determined according to the Highlight test procedure described above); puncture force (as determined according to the Highlight test procedure described above); puncture elongation at 100% elongation in MD (as determined according to the Highlight test procedure described above); puncture elongation at 100% elongation in MD (as determined according to the Highlight test procedure described above); oxygen transmission rate (as determined according to ASTM D-1434); oxygen transmission rate at 100% elongation in MD (as determined according to ASTM D-1434); and Average Cling (as determined according to ASTM D-4649). The results of these evaluations are depicted in Figures 1-8.

## Claims

1. A cast film comprising at least the following three layers:
a. a first skin layer comprising a homogeneously branched linear low density polyethylene having a density in the range of 0.87 to 0.90 g/cm³ and a melt index greater than 1 g/ 10 min;
b. a core layer comprising linear low density polyethylene having a density 0.915 to 0.930 g/cm³ and a melt index greater than 1 g/10 min;
c. a second skin layer comprising at least 25 % by weight of the release layer of a propylene based plastomer or elastomer (PBPE) having an ethylene content of from 5 to 18% and a MFR of from 4 to 8 g/10 min;
wherein the first and the second skin layers each comprise from 10 to 20% by weight of the cast film.

2. The cast film of claim 1 wherein the second skin layer comprises 100% propylene based plastomer or elastomer (PBPE).

3. The cast film of claim 1 wherein the second skin layer further comprises up to 75% of another resin selected from the group consisting of random copolymer polypropylene and polyethylene (LDPE, LLDPE, m-LLDPE, HDPE).

4. The cast film of claim 1 wherein the homogeneously branched linear low density polyethylene in the first skin layer has a ratio of I₁₀/I₂ in the range of from 7 to 8.

5. The cast film of claim 1 wherein the homogeneously branched linear low density polyethylene in the first skin layer has a molecular weight distribution (Mw/Mn) ratio in the range of from 2 to 3.

6. The cast film of claim 1 wherein the linear low density polyethylene in the core layer has a molecular weight distribution (M_{w}/Mn) ratio in the range of from 7 to 9.

7. The cast film of claim 1 wherein the linear low density polyethylene in the core layer has a ratio of I₁₀/I₂ in the range of from 7 to 8.

8. The cast film of claim 1 wherein the propylene based plastomer or elastomer has a molecular weight distribution (M_{w}/Mn) ratio of less than 3.5.

9. The cast film of claim 1 wherein the film is from 15 to 30 microns thick.

10. The cast film of claim 1 **characterized by** having an increased cling when stretched to at least 50% as compared to the unstretched film.

11. The cast film of claim 10 wherein the stretched film has a cling of at least 150g, as determined according to ASTM D4649.
